# EUROPEAN PATENT APPLICATION

(11) **EP 2 266 892 A1**
(43) Date of publication of application: **29.12.2010**
(21) Application number: 09163712.4
(22) Date of filing: 25.06.2009
(51) Int. Cl.: B65D 75/58, C09J 5/06, B65D 65/14

(54) **Packaging with lap-seal comprising a cold seal and a release lacquer seal, and production method therefor**

(71) Applicant: Amcor Flexibles Transpac N.V., 1935 Zaventem (BE)
(72) Inventor: Abbel, Annemarie, 2800 Mechelen (BE); Daelmans, Eddy, 3650 Disen-Stokkem (BE); Liebens, Geert, 3740 Bilzen (BE); Somers, Kurt, 3110 Rotselaar (BE)
(74) Representative: pronovem

(57) **Abstract**

The present invention relates to a packaging comprising at least one lap-seal wherein a cold seal layer is sealed on a release lacquer layer.

## Description

### Field of the invention

The present invention relates to a folding pack obtained from a film web comprising a cold-seal coating on the reversed side (inside) and a release lacquer on the right side (outside) of the web. The present invention relates in particular to a folding pack comprising at least one cold-seal on release lacquer seal.

### State of the art

Flexible packaging material in the form of packaging film web are usually polymer-based laminates or coextrudates optionally comprising paper or metallic layer. Those materials are usually presented in the form of reels of a few hundred meters intended to be used on a form fill and seal packaging line.

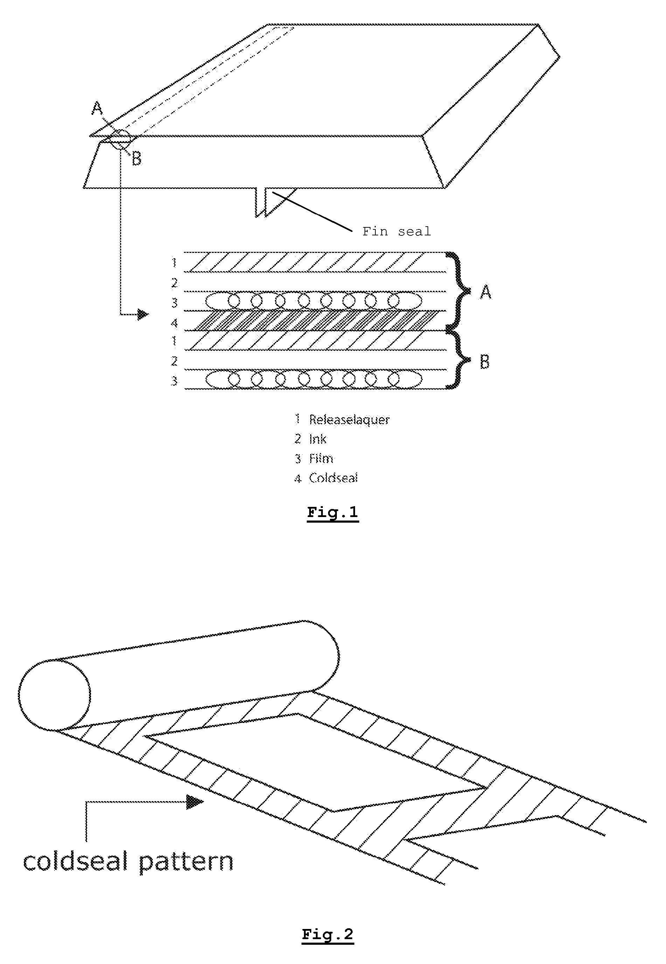

These film webs comprise regions with cold-seal coating on the inside/reverse side (in pattern, grid-pattern or all-over) and an all-over release lacquer coating on the outside/right side. This is necessary to avoid that the right side of such a film web presented on winded reels sticks to the reverse side in the regions where the cold seal coating is applied (see Fig.2).

EP 1 121 301 B1 discloses a packaging material for wrapping various confectionery items, obtained from an enrolled film web comprising cold-sealing coatings.

### Aims of the invention

The present invention aims to provide a packaging comprising at least one seal wherein a cold seal layer is sealed on a release lacquer layer.

The present invention further aims to provide a method for the preparation of a packaging comprising at least one seal wherein a cold seal layer is sealed on a release lacquer layer, in particular on a packaging comprising at least one lap seal.

### Summary of the invention

The present invention discloses a packaging comprising at least one lap-seal wherein a cold seal layer is sealed on a release lacquer layer.

Preferred embodiments of the present invention disclose at least one, or an appropriate combination of the following features:
- the cold seal layer of the lap seal is based on polymers selected from the group consisting of styrene based polymer, natural and/or synthetic rubber, modified cellophanes, phenolformaldehyde resins or waxes, silicone resins, (meth)acrylic acid, vinyl ether or mixture thereof;
- the composition of the cold seal layer is based on polymers selected from the group consisting of natural and/or synthetic rubbers and copolymers of (meth) acrylic acid and styrene;
- the release lacquer layer composition is based on polyamide and nitrocellulose/ polyamide blend systems;

The present invention further discloses a method for the preparation of a packaging comprising at least one lap-seal wherein a cold seal layer is sealed on a release lacquer layer, said method comprising the steps of:
- providing a film web comprising a cold-seal coating on the reversed side and a release lacquer on the right side of the web;
- heat treating the release lacquer of the film web in the area where the lap-seal will be performed;
- folding said web to achieve said packaging.

### Short description of the drawings

Fig. 1 represents a possible packaging according to the present invention showing the presence of a fin seal where a cold seal layer is sealed against a cold seal layer and a lap seal where a cold seal layer is sealed against a release lacquer. A section of a possible lap seal structure is also represented

Fig. 2 represents a film web comprising regions with cold-seal coating on the inside/reverse side (in pattern, grid-pattern or all-over) and an all-over release lacquer coating on the outside/right side.

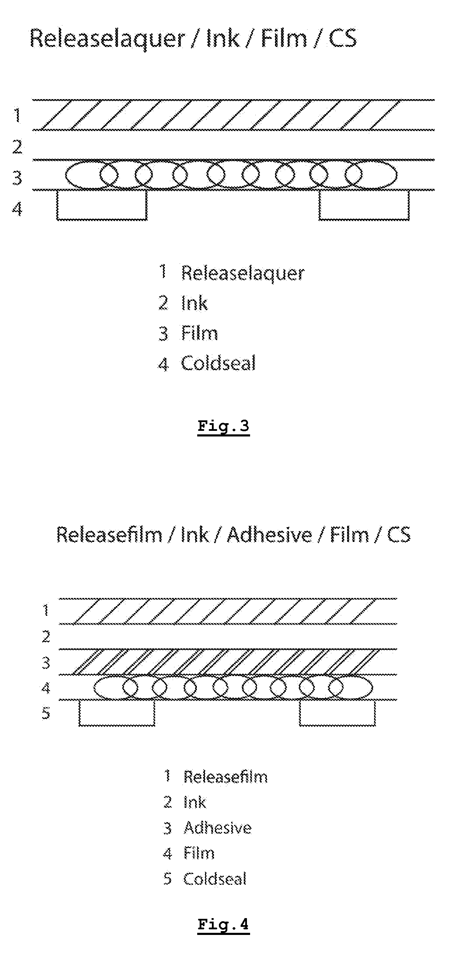

Fig. 3 and Fig.4 represent sections of film web multilayer structures that can be used according to the method of the present invention.

### Detailed description of the invention

Cold-sealable composition/coating are compositions that are able to provide a sealing which takes place instantly by simple face-to-face contact at a temperature of between roughly 10° and 40°C, optionally upon application of a moderate pressure to the area to be sealed. In fact, the temperature is not a critical parameter for obtaining sealing by means of a cold-sealing coating. The temperature practically has no influence on the quality of the sealing.

Cold-sealing coatings are compositions based on natural and/or synthetic rubber optionally used in combination with modified cellophanes, phenolformaldehyde resins or waxes. In addition to rubbers, polymers based on styrene, (meth)acrylic acid or vinyl ether are widely employed, alone or as a mixture. Lastly, silicone resins may also be employed. Compositions including mixtures of natural and synthetic rubbers and copolymers of (meth)acrylic acid and styrene are preferred.

These cold-sealing coatings are deposited onto the substrate (web) at a rate of approximately 1 to 5 g/m². Cold-sealing coatings can be applied in the form of a solution or dispersion or even in the molten state. Coating deposition techniques well known by those skilled in the art may be employed, such as for example, heliographic or flexographic printing or offset printing.

In order to integrate the packaging and sealing process on a packaging machine, the packaging film is manufactured in a large roll with the printed side (right side) of the film in contact with the cold-seal adhesive coated side (reverse side) of the film. When left unprotected, the pressure built up in the reel would lead to a transfer between the surfaces of ink to cold-seal adhesive and /or cold-seal adhesive to the ink surfaces.

To overcome this problem, the printing ink surface is coated with a protective lacquer named a cold-seal release lacquer (CSRL), that gives a release between the adhesive and print surfaces of the film in the reel.

CSRL are generally polyamide or nitrocellulose/polyamide blend systems designed to act as a protective coating for the printed side of a film package. The CSRL must provide gloss and scuff protection to the finished packaging film as well as being block resistant while the film is in the form of a reel. High wind-up tension within the printed reel makes the CSRL/cold seal coating interface critical.

An alternative method is to work with a release film on the outside and to have the ink reverse printed.

As described above, the CSRL will give a release against cold-seal, and consequently one can only make inside-inside seals on the pack (cold-seal against cold-seal). So the man skilled in the art faces the problem that he cannot make inside-outside seals and therefore no lap-seals are possible.

One problem is that it prevents to make easy-open packs based on lap-seal technology.

Another problem is the waste of material as a significant amount of material could be saved when changing over from a fin-seal (inside-inside) to a lap-seal (inside-outside), a lap-seal being less film web consuming than a fin seal (see Fig.1).

The present invention discloses a packaging obtained from a film web which could be a monolayer or a multilayer film web comprising at least one cold-seal and one release lacquer (CSRL) **characterised in that** at least a cold seal-release-lacquer seals is present as a result of a partial heat treatment on the release lacquer of the film web in the particular area where the lap-seal (inside-outside or cold seal-release lacquer seal) will be made.

The heating of the release-lacquer zone is performed in a way such that no melting damage can occur to the product to be packed. The packaging is produced in a manner that it can easily run on any type of packaging machine, for example a vertical or horizontal form fill and seal machine.

Furthermore the cold seal-cold seal and the cold seal-release lacquer seals could be easy-peel and could be resealable. A resealable, cold-sealable composition or coating is able to provide a new cold-sealing after an initial cold sealing has been provided and subsequently pealed in order to open the package. The strength of the subsequent sealing needs not necessarily be as strong as the initial cold sealing. The use of a resealable, cold-sealable composition allows for reclosing and resealing of the package and is therefore a highly desired feature in situations where the entire product is not to be used at one time.

### Examples

### Release lacquer

Non-limitative examples of release lacquer of the company Siegwerk are the types: 10-600251-2, 10-600252-0, 10-600754-4, 10-601068-9 Matt, 10-601137-2, 10-601561-3, 10-601904-5, 10-608682-0, 10-609345-3, 10-611395-4 matt, 10-615392-7, 10-615765-4.

Other possible release lacquer from the company Sun Chemical are the types: 10-RF-29, 10-RF-45, 10-RF-52, 10-RF-54, 10-RF-55, 10-RF-56, 10-RF-58, 10-RF-60, 10-RF-61, 10-RF-62, 10-RF-63, 10-RF-64, 10-RF-66, 10-RF-67, 10-RF-68, 10-RF-70.

### Coldseal coatings

Non-limitative examples of cold seal coatings are:
Henkel 22-263, 22-272, 22-392, 22-477, 22-848, 22-861. Sun Chemical: S7188, S7883, S7936, S7979, S7985, S8011, S8039, S8041, S8044, S8046, S8057, S8078, S8083, S8093, S8095, S8110, S9044, C1225, S8124, S8129, S8130, S8101.

### Example:

### Measurement of traditional cold seal on cold seal seal strength at room temperature

Cold seal S8101 from Sun Chemical and release lacquer 10-RF-29 of Sun Chemical are used in this example.

| **Bond strength (cN/ 25mm)** | |
|---|---|
| | **Cold seal - Cold seal seal force (0,5s- 700N)** |
| sample 1 | 387 |
| sample 2 | 430 |
| sample 3 | 421 |

In the next table, a recloseable cold seal is used and the seal strength has been measured after 1, 2 and 3 reseals with a machine and a reseal pressure of 150 N.

| **Bondstrength ( cN/25 mm)** | | | | |
|---|---|---|---|---|
| | **Cold seal - Releaselacquer seal force ( 0,5s, 700 N)** | **Reseal 1** | **Reseal 2** | **Reseal 3** |
| **Web temp. (°C)** | | **Reseal** **(0,5s- 150 N- room temp)** | | |
| 20 | 0 | | | |
| 40 | 0 | | | |
| 55 | 0 | | | |
| 70 | 540 | 75 | 81 | 86 |
| 85 | 555 | 50 | 51 | 50 |
| 100 | 535 | 43 | 29 | 29 |

### Method for measuring the seal force:

Bond strengths of the seal force are measured according to the ASTM F 88 procedure. A sealing device of brand "Robot" is used to make a seal on a certain area with a defined pressure, time and temperature. Afterwards, a dynamometer of brand "Zwick" is used to measure the strength needed to pull open the seal. Bond strengths of the seals are expressed in cN/25mm.

## Claims

1. Packaging comprising at least one lap-seal, wherein a cold seal layer is sealed on a release lacquer layer.

2. Packaging according to Claim 1, wherein the composition of the cold seal layer is based on polymers selected from the group consisting of styrene based polymer, natural and/or synthetic rubber, modified cellophanes, phenolformaldehyde resins or waxes, silicone resins, (meth)acrylic acid, vinyl ether or mixture thereof.

3. Packaging according to Claim 2, wherein the composition of the cold seal layer is based on polymers selected from the group consisting of natural and/or synthetic rubbers and copolymers of (meth) acrylic acid and styrene.

4. Packaging according to Claim 1, wherein the release lacquer layer composition is based on polyamide and nitrocellulose/ polyamide blend systems.

5. Method for the preparation of the packaging according to any of the previous claims comprising the steps of:
- providing a film web comprising a cold-seal coating on the reversed side and a release lacquer on the right side of the web;
- heat treating the release lacquer of the film web in the area where the lap-seal will be made;
- folding said web to achieve said packaging.
